**Europäisches Patentamt**

**European Patent Office**

**Office européen des brevets**

(19)

(11) Veröffentlichungsnummer: **0 236 852 B1**

(12) **EUROPÄISCHE PATENTSCHRIFT**

(45) Veröffentlichungstag der Patentschrift:
27.03.91 Patentblatt 91/13

(51) Int. Cl.$^5$: **B01D 53/34**

(21) Anmeldenummer: 87102668.8

(22) Anmeldetag: 25.02.87

(54) **Verfahren zur Verminderung der Chloridbelastung in nassen Rauchgasentschwefelungsanlagen.**

(30) Priorität: 05.03.86 DE 3607191

(43) Veröffentlichungstag der Anmeldung:
16.09.87 Patentblatt 87/38

(45) Bekanntmachung des Hinweises auf die
Patenterteilung:
27.03.91 Patentblatt 91/13

(84) Benannte Vertragsstaaten:
AT BE CH DE ES FR GB GR IT LI LU NL SE

(56) Entgegenhaltungen:
DE-A- 3 305 120
US-A- 3 995 006
VGB KRAFTWERKSTECHNIK, Band 63, Nr. 4,
April 1983, Seiten 335-344; H. GUTBERLET
"Gips aus der Rauchgasentschwefelung"

(73) Patentinhaber: KRC Umwelttechnik GmbH
Alfred-Nobel-Strasse 20
W-8700 Würzburg 1 (DE)

(72) Erfinder: Deuster, von, Eckhart Dr.,
Dipl.-Chemiker
Mainstockheimer Strasse 5
W-8710 Kitzingen (DE)

(74) Vertreter: Werner, Hans-Karsten, Dr. et al
Deichmannhaus am Hauptbahnhof
W-5000 Köln 1 (DE)

## Beschreibung

Gegenstand der vorliegenden Erfindung ist ein Verfahren zur Verminderung der Chloridbelastung des oberen Absorberkreislaufes von zweistufigen nassen Rauchgasentschwefelungsanlagen, bei denen Kalkstein als Absorptionsmittel eingesetzt und aus dem unteren Oxidationskreislauf gröberkörniger Rauchgasgips über einen Hydrozyklon abgeschieden wird.

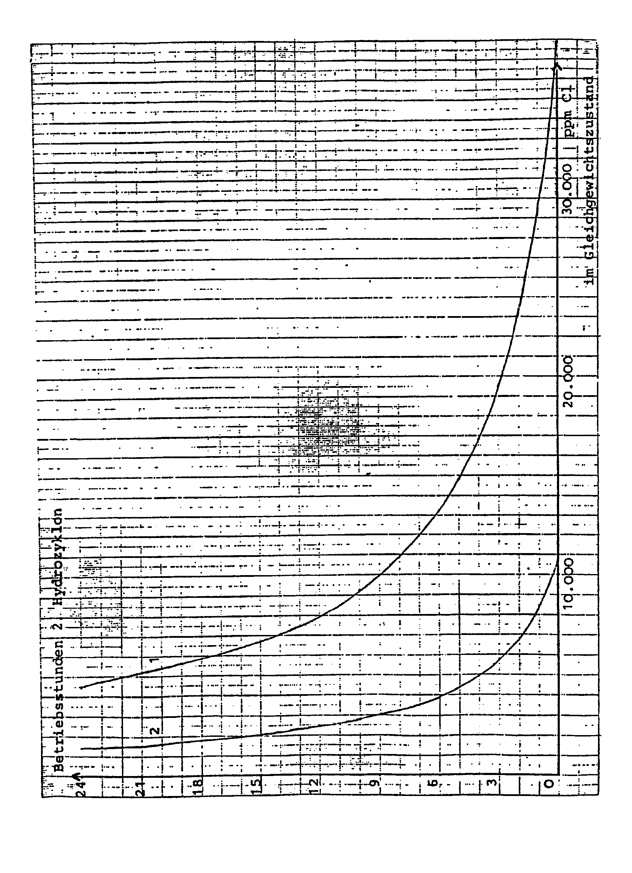

Ein solches Verfahren wird biespielsweise in der Druckschrift VGB Kraftuverlastechnile 63, Heft 4, April 1983 in dem Artikel "gips aus der Rauchgasentschwefelung", 5.335-344 und insbesondere auf 5.339, Bild 11 beschrieben.

Der obere Absorberkreislauf in derartigen Rauchgasentschwefelungsanlagen ist zunächst einmal belastet mit dem Chlorid aus dem Rauchgas. Die Chloridbelastung hängt dabei insbesondere von dem Chloridgehalt der zu reinigenden Rauchgase ab, zum anderen aber auch in erheblichem Umfang von dem Chloridgehalt des unteren Oxidationskreislaufes, da stets eine gewisse Menge dieser Flüssigkeit mit dem Rauchgasstrom mitgerissen wird und dabei in den oberen Absorberkreislauf gelangt. Diese mitgerissene Menge an Chlorid hängt selbstverständlich in erheblichem Maße von der Chloridkonzentration des Oxidationskreislaufes ab. Das Chlorid wird aus diesem Kreislauf bisher nur ausgeschleust in dem Maße, indem diesem Kreislauf Gips und Filtrat entzogen werden. Die ausgeschleuste Flüssigkeitsmenge muß durch entsprechende Mengen Prozeßwasser ersetzt werden. Das Prozeßwasser wird zugeführt durch Spülung der Tropfenabscheider. Dabei wird einerseits die Wassermenge zugeführt, die das Rauchgas nach der Reinigung im Reingas in Form von Wasserdampf abführt ; zum anderen die Wassermenge, die mit dem feuchten Rauchgasgips und dem Filtrat dem System entzogen wird.

Vorzugsweise wird dem unteren Oxidationskreislauf erst dann Gips und Filtrat entzogen, wenn sich eine ausreichende gröberkörnige Rauchgassuspension entsprechend der spezifischen Dichte gebildet hat. Weiterhin muß diesem Kreislauf über den Hydrozyklon und das Trommelfilter Gips und Filtrat entzogen werden, wenn entweder der Chloridgehalt so stark ansteigt, daß die Oxidation darunter leidet oder der Pegel des Sumpfes über den Maximalwert angestiegen ist. Letzteres geschieht insbesondere dann, wenn durch die Spülung der Tropfenabscheider zuviel Prozeßwasser zugeführt wird. Die Zufuhr von zuviel Prozeßwasser führt dazu, daß bereits eine Gipssuspension dem Hydrozyklon zugeführt werden muß, welche noch nicht die optimale Korngrößenverteilung aufweist und noch zuwenig Feststoffanteil besitzt. Eine Reduzierung des Chloridgehaltes im unteren Oxidationskreislauf durch Zufuhr von mehr Prozeßwasser und Abzug von Mehrfiltrat stößt somit auf die Grenze der nicht mehr optimalen Ausbildung der Gipssuspension.

Ein zu hoher Chloridgehalt im oberen Absorberkreislauf führt aber zu schlechteren Wascheffekten und vor allen Dingen zur Gefahr der Korrosion der aus Edelstahl gebauten Anlage, da bei den dort herrschenden pH-Werten höhere Chloridgehalte bereits zu einer gewissen Korrosion führen können.

Die Erfindung hat sich daher zunächst die Aufgabe gestellt, den Chloridgehalt im oberen Absorberkreislauf zu reduzieren, ohne auf die übrigen Konzentrationsverhältnisse im Gesamtsystem Einfluß zu nehmen.

Überraschenderweise ist diese Aufgabe gelöst worden dadurch, daß dauernd oder in Intervallen die verdünnte Gipssuspension des Hydrozyklonoberlaufs enthaltend die feinerkörnigen Festteile aus dem Hydrozyklon in einem weiteren, hochwirksamen Hydrozyklonsystem aufgetrennt wird in

a) eine in den Oxidationskreislauf zurückgeführte konzentriertere Suspension enthaltend die feinerkörnigen Festteile und

b) einen dem System zu entnehmenden Hydrozyklonoberlauf des hochwirksamen Hydrozyklonsystems enthaltend feinstteilige Festteile und gelöste Salze.

Hierbei hat es sich als vorteilhaft erwiesen, den Hydrozyklonoberlauf vor der weiteren Auftrennung in die Fraktionen a) und b) in einem Zwischentank zu lagern. Als hochwirksames Hydrozyklonsystem haben sich insbesondere mehrere parallel arbeitende, kleinere Hydrozyklone bewährt. Derartige Hydrozyklonsysteme werden beispielsweise von der Firma AKW, Amberger Kaolinwerke GmbH, Hirschau, auf den Markt gebracht.

Sofern das erfindungsgemäße Verfahren dauernd durchgeführt wird, ist es möglich, den Chloridgehalt ganz erheblich zu senken und damit auch die Chloridgelastung des oberen Absorberkreislaufes nahezu auf die Chloridmengen zu beschränken, die jeweils frisch aus dem Rauchgasgips in das System gelangen.

Sofern das erfindungsgemäße Verfahren nur in Intervallen durchgeführt wird, steigt zwar der Chloridgehalt auf etwas höhere Werte, dafür wird jedoch die dem System zu entnehmende Menge an Hydrozyklonoberlauf wesentlich verringert.

Dieser Hydrozyklonoberlauf enthält nur noch feinstteilige Festteile und gelöste Salze und kann daher dem Abwasser bzw, der Abwasseraufbereitungsanlage zugeführt werden. Erhöhte Mengen dieses Hydrozyklonoberlaufs erfordern aber auch erhöhte Mengen zugeführtes Prozeßwasser.

Nach dem erfindungsgemäßen Verfahren ist es somit möglich, in eleganter Weise die gelösten Salze, insbesondere das Chlorid, unabhängig von den sonstigen Konzentrationsverhältnissen der Rauchgasentschwefelung aus dem System auszuschleusen, wobei selbstverständlich dementsprechend erhöhte Mengen Hydrozyklonoberlauf anfallen. Ein weiterer großer Vorteil des erfindungsgemäßen Verfahrens besteht darin, daß in diesem Hydrozyklonoberlauf auch die feinstteiligen Festteile der Gipssuspension des unteren Oxidationskreislaufes vorhanden sind und aus dem System ausgeschleust werden. Diese feinstteiligen Festteile führen nämlich gelegentlich zu Störungen der Filtration auf dem Trommelfilter. Ihr Anteil steigt insbesondere, wenn starker mit feinen Inertteilen verunreinigtes Kalksteinmehl zu Einsatz kommt. Das erfindungsgemäße Verfahren kann somit auch dann zum Einsatz kommen, wenn nicht der Chloridgehalt des oberen Absorberkreislaufes, sondern der Anteil an feinstteiligen Festteilen in der Gipssuspension kritische Grenzwerte überschreitet. Das erfindungsgemäße Verfahren macht somit das gesamte System der zweistufigen nassen Rauchgasentschwefelung mit Kalkstein als Absorptionsmittel und gröberkörnigem Rauchgasgips als Endprodukt flexibler und weniger störanfällig. Es gestattet weiterhin, starker mit feinen Inertteilen verunreinigtes Kalksteinmehl als Absorptionsmittel einzusetzen, ohne daß es hierdurch zu Störungen der Filtration kommt.

Bei einer typischen Ausführungsform des erfindungsgemäßen Verfahrens wird die Suspension des unteren Oxidationskreislaufes mit einem Feststoffgehalt von ca. 15% im ersten Hydrozyklon aufgetrennt in eine gröberkörnige Rauchgassuspension mit ca. 50% Feststoffgehalt und eine verdünnte Gipssuspension des Hydrozyklonoberlaufes mit etwa 7 bis 10% Reststoffanteil feinerkörniger Festteile. Bei der erfindungsgemäßen weiteren Auftrennung dieses Hydrozyklonoberlaufes entstehen eine konzentriertere Suspension enthaltend etwa 30 bis 40% Feststoffe feinkörniger Festteile, die in den Oxidationskreislauf zurückgeführt werden und ein dem System zu entnehmender Hydrozyklonoberlauf mit etwa 1 bis 2% Feststoffanteil feinstteiliger Festteile sowie der gelösten Salze.

Es hat sich gezeigt, daß insbesondere beim Intervallbetrieb bereits mit relativ geringen Mengen zusätzlichen Abwassers der Chloridgehalt im oberen Absorberkreislauf auf weniger als 1/4 reduziert werden kann. Bei dauernder Durchführung des erfindungsgemäßen Verfahrens sinkt der Chloridgehalt auf 10 bis 15% der sich früher im Gleichgewicht einstellenden Chloridmengen.

Beim Vergleich mit der bisher durchgeführten Minderung des oberen Chloridgehaltes durch erhöhte Zufuhr von Prozeßwasser zeigt sich, daß wesentlich geringere Mengen zusätzliches Abwasser entstehen und dabei nicht einmal die übrigen optimierten Konzentrationsverhältnisse der Gesamtanlage negativ beeinflußt werden müssen.

In den nachfolgenden Beispielen ist das erfindungsgemäße Verfahren näher erläutert. Aus den Vergleichsversuchen gehen die überraschenden Vorteile deutlich hervor.

Beispiel 1

Hinter der Ableitung für den Hydrozyklonoberlauf einer im betrieb befindlichen Rauchgasentschwefelungsanlage der Anmelderin wurde ein Zwischentank, ein zweites, hochwirksames Hydrozyklonsystem (bestehend aus mehreren parallel arbeitenden, kleineren Hydrozyklonen, Modell KRS 98 IV F der AKW, Hirschau) und eine weitere Ableitung für Hydrozyklonoberlauf eingebaut. Dieses System war so geschaltet, daß die konzentriertere Suspension enthaltend die feinerkörnigen Festteile in den Oxidationskreislauf geleitet wurde, während der Hydrozyklonoberlauf zur Abwasseraufbereitungsanlage geleitet wurde. Der Chloridgehalt des Prozeßwassers betrug ca. 200 ppm. Bei herkömmlicher Fahrweise betrug der Chloridgehalt im unteren Oxidationskreislauf (Quencher) 36888 ppm und im oberen Absorberkreislauf (Absorber) 10682 ppm. Das zusätzliche hochwirksame Hydrozyklonsystem reduzierte bei dauerndem Lauf den Chloridgehalt im Oxidationskreislauf auf 4471 ppm und im Absorberkreislauf auf 1405 ppm. Die zusätzliche Abwassermenge betrug 20 m³ pro Stunde. Bereits bei 6-stündiger Laufzeit pro Tag sank der Chloridgehalt im Oxidationskreislauf auf 13205 ppm und im Absorber auf 3915 ppm. Die zusätzliche Abwassermenge betrug dementsprechend nur 5 m³ pro Stunde. Bei 12-stündiger Laufzeit pro Tag reduzierte sich der Chloridgehalt im Oxidationskreislauf auf 7993 ppm und im Absorberkreislauf auf 2421 ppm. Die zusätliche Abwassermenge betrug 10 m³ pro Stunde.

Zum Vergleich wurde die gleiche Anlage ohne Einschalten des zusätzlichen hochwirksamen Hydrozyklonsystems mit zusätzlichen Mengen Prozeßwasser gefahren, die über den Hydrozyklon und das Trommelfilter in Form von zusätzlichem Filtrat anfielen.

5 m³ zusätzliches Prozeßwasser pro Stunde führten zur gleichen Menge zusätzlichem Filtrat und führten ebenfalls zu einer Senkung des Chloridgehaltes im Oxidationakreislauf auf 13200 ppm bzw. 3900 ppm im Absorberkreislauf. Diese zusätzliche Menge Prozeßwasser führte Jedoch zu einer wesentlichen Verkürzung der Verweilzeit der Gipssuspension im Oxidationskreislauf und damit bereits zu schlechterer Korngrößenverteilung der Gipssuspension. Die Ausschleusung von feinstteiligen Festteilen am Trommelfilter vorbei in das Abwasser führte bei nur 6-stündiger Benutzung des zusätzlichen Hydrozyklonsystems zu besserer Filtrierbarkeit der vom ersten Hydrozyklon abgetrennten konzentrierten Gipssuspension des gröberkörnigen Rauchgasgipses.

3

In dem nachfolgenden Diagramm sind die Konzentrationen an Chlorid im unteren Oxidationskreislauf (1) und im oberen Absorberkreislauf (2) in Abhängigkeit der Betriebsstunden des zweiten Hydrozyklonsystems pro Tag graphisch dargestellt.